(19) Europäisches Patentamt
European Patent Office
Office européen des brevets

(11) Publication number: **0 032 757 B2**

(12) **NEW EUROPEAN PATENT SPECIFICATION**

(45) Date of publication of the new patent specification: **07.03.90**

(51) Int. Cl.$^5$: **C 07 C409/32**, C 07 C409/38, C 08 F 4/32, C 08 F 2/18, C 08 F 14/06

(21) Application number: **81200005.7**

(22) Date of filing: **06.01.81**

(54) **Aqueous peroxide emulsion and its use in suspension (co)polymerization reactions.**

(30) Priority: **16.01.80 NL 8000260**

(43) Date of publication of application: **29.07.81 Bulletin 81/30**

(45) Publication of the grant of the patent: **23.03.83 Bulletin 83/12**

(45) Mention of the opposition decision: **07.03.90 Bulletin 90/10**

(84) Designated contracting states: **BE DE FR GB IT NL SE**

(56) References cited:
**DE-A- 2 634 131**
**GB-A- 1 095 914**
**GB-A- 1 180 363**
**GB-A- 2 083 374**
**US-A- 2 648 655**
**US-A- 2 648 656**
**US-A- 2 665 269**
**US-A- 2 932 628**
**US-A- 3 029 229**
**US-A- 3 067 186**
**US-A- 3 312 678**
**US-A- 3 324 097**
**US-A- 3 507 800**
**US-A- 3 988 261**
**US-A- 4 058 495**
**US-A- 4 076 920**
**H Miniato H. Iwai, K. Hashimoto, T. Yasui "Journal of Polymer Science" part C no.23, pp 761-764(1968)**
**Einführung in die Radikalchemie. W A Pryor, Verlag Chemie GmbH 1974 p.95, table 18**
**Industrial and Engineering chemistry,56(12),33(1964)**
**JACS March 1950 vol 72 pp 1254-1262 (Strain et al)**
**The file contains technical information submitted after the application was filed and not included in this specification**

(73) Proprietor: **AKZO N.V.**
**Velperweg 76**
**NL-6824 BM Arnhem (NL)**

(72) Inventor: **Torenbeek, Reinder**
**van Hogendorpstraat 22**
**NL-7391 LE Twello (NL)**
Inventor: **Verhelst, Willem Franciscus**
**Pikeursbaan 2**
**NL-7213 BT Gorssel (NL)**

**EP 0 032 757 B2**

## Description

The present invention relates to storage stable aqueous peroxide emulsion comprising an organic peroxide which is liquid at —5 °C, a surfactant and/or a protective colloid. An emulsion of the type indicated above is known from United States Patent Specification 3 988 261. The emulsions described in it consist of :

a) 30-75 % by weight of an organic peroxide ;
b) an emulsifying amount of a water-soluble surfactant and/or a protective colloid, and
c) the remainder water.

In said patent specification it is stated that these emulsions are stable to a freeze-thaw cycle. It is recommended that the emulsions should be frozen for transportation and be thawed before use. It is stated that these frozen peroxide emulsions are relatively safe and easy to handle and transport. Moreover, it is mentioned that its safety is also determined by the fact that owing to the latent heat of fusion of the water component the frozen emulsions offer a great self-contained heat sink.

These frozen emulsions have several disadvantages, however. In the event of the large amounts in which these emulsions are stored in actual practice being struck by a calamity, with the frozen emulsion articles being exposed to a rapidly rising ambient temperature, the relatively great heat sink and the low heat conductivity of ice will initially give rise only to the melting of the outermost portion of the frozen article. Considering the difference between the conductivity of the liquid emulsion and the frozen emulsion, the temperature of the resulting small amount of liquid peroxide emulsion will rapidly rise.

In these circumstances the frozen emulsion will sooner lead to uncontrolled decomposition of the peroxide than corresponding, non-frozen, aqueous emulsions. This disadvantage will still be enhanced in that frozen particles tend to aggregate, as a result of which the size of the particles will be considerably increased.

Moreover, the use of frozen emulsions requires several additional steps, which are undesirable for practical purposes. The emulsion should, of course, first be frozen. Next, the emulsion is to be thawed before it can be used. Needless to add that this thawing calls for the utmost care. In view of the instability of the present peroxides the emulsions must subsequently be rapidly processed. Should this not be possible (all of a sudden) for any reason, then the activity of the peroxide emulsion will rapidly decrease. It also may be considered to apply the frozen emulsion as such. However, the metering of solid substances is difficult to automate. Moreover, fusion of the particles may make it difficult to obtain the correct feed rate.

The present invention relates to an emulsion of the type indicated above and is characterized in that the organic peroxide is of the formula

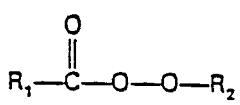

or

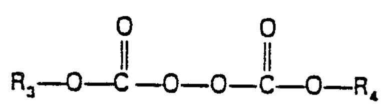

wherein $R_1$ is a tert. alkyl group having 4-9 carbon atoms or a phenoxy-methyl group, $R_2$ is an alkyl group having 4-8 carbon atoms or a cumyl group and $R_3$ and $R_4$ are substituted or unsubstituted alkyl groups having 3-8 carbon atoms, and the emulsion contains 2-20 % by weight of an alkanol having 1-4 carbon atoms and/or an alkane diol having 2-4 carbon atoms the emulsion being liquid at a temperature in the range of — 10 °C to — 25 °C. This composition does not have the disadvantages that are inherent in the frozen emulsions.

Depending on the amounts in which the various components are used, the present composition is still liquid at a temperature in the range of — 10 °C to — 25 °C. The present Emulsion may be used the suspension (co)polymerization of ethylenically unsaturated compounds such as vinyl chloride. The emulsions known so far contain, in addition to peroxide, merely surfactants, protective colloids and water. The incorporation into these emulsions of further substances was considered objectionable in view of the possibly negative influence thereof on the peroxide and resulting polymer.

For example, it has appeared that the addition of only 0,5 to 2 % by weight of 2-ethyl hexanol to di-2-ethylhexyl peroxydicarbonate causes the active oxygen content to decrease by 30 to 40 % after two months' storage at 0 °C. Without the addition of the alcohol the decrease was 5 %.

Further, it is also known that alcohols may serve as chain transfer agents and when used in (co)polymerization reactions of ethylenically unsaturated compounds may therefore cause a decrease of the molecular weight of the polymer.

Moreover, of further additives it is generally known that they may cause problems in that they might get into the final polymer.

It has been found, however, that the decline of the activity of the present emulsions at — 10 °C to

— 25 °C is extremely small and the use of these emulsions leads to the same results as the use of compositions that do not contain the above-mentioned alcohols.

It should be added that German Patent Application 2 418 386 describes aqueous suspensions that contain 1-30 % by weight of benzoyl peroxide, 1-30 % by weight of surfactant and 10-80 % by weight of an alcohol. These compositions are applied in the treatment of acnes. In contrast to the situation with emulsions the risk of alcohol diffusing in the peroxide is not or hardly to be expected in the case of suspensions. Moreover, benzoyl peroxide is a member of a considerably stabler class of compounds than the present peroxides. It should be added that German Patent Application 2 629 467 describes aqueous dispersions of solid oil-soluble radical initiators that are stable when storaged at a temperature above — 5 ° C.

It is stated that to these compositions there may be added a substance that decreases the melting point. The present invention, however, relates to emulsions of organic peroxides that are insufficiently stable at a temperature higher than — 5 °C. Moreover, the above application does not mention the present alcohols.

The emulsions according to the invention generally contain 20-60 % by weight and preferably 30-50 % by weight of the organic peroxide. These limits to the amount of peroxide to be used are particularly governed by practical considerations. Suitable peroxides are peroxides which are liquid at — 5° C of the general formulae :

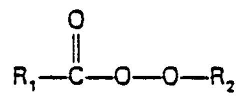

where :

$R_1$ = a tert. alkyl group having 4-9 carbon atoms or a phenoxymethyl group, and

$R_2$ = an alkyl group having 4-8 carbon atoms or a cumyl group.

As examples of suitable peresters may be mentioned tert. butyl peroxypivalate, tert. amyl peroxypivalate, tert. butyl peroxyneodecanoate, cumyl peroxyneodecanoate, 2,4,4-trimethylpentyl peroxyphenoxyacetate.

It is preferred that the organic peroxide to be used should be a peroxydicarbonate which is liquid at — 5 °C and has the general formula :

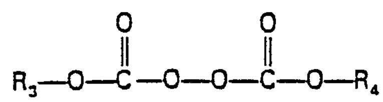

where $R_3$ and $R_4$ represent substituted or unsubstituted alkyl groups having 3-8 carbon atoms. As substituent may be used, for instance, an alkoxy group having 1-3 carbon atoms. The alkyl groups $R_3$ and $R_4$ may be branched or not. As examples of suitable peroxydicarbonates may be mentioned : di-n-propyl peroxydicarbonate, di-n-butyl peroxydicarbonate, di-sec-butyl peroxydicarbonate, di-2-ethylhexyl peroxydicarbonate, di-3-methoxybutyl peroxydicarbonate and di-2-ethoxyethyl peroxydicarbonate. Preferably use is made of di-2-ethylhexyl peroxydicarbonate. Also use may be made of asymmetric peroxydicarbonates such as isopropyl-sec-butyl peroxydicarbonate. The present emulsions may, of course, also contain mixtures of peroxides.

In addition to the organic peroxide the aqueous emulsion should contain 2-20 % by weight and preferably 5-15 % by weight of an alkanol having 1-4 carbon atoms and/or an alkane diol having 2-4 carbon atoms. The presence of these alcohols leads to a substantial decrease of the melting point of the present emulsions. Depending on their composition, the emulsions according to the invention are still liquid at a temperature in the range of — 10° to — 25 °C. At very low temperature some of the present peroxides might become solid, which does not have any adverse effect on the stability of the composition. For convenience these compositions are referred to here as emulsions.

If less than 2 % by weight of alcohol should be added, then the effect of decreasing the freezing point would be too small in actual practice. Adding more than 20 % by weight of alcohol has the disadvantage that compositions might become inflammable.

Examples of the above-mentioned alcohols are : methanol, ethanol, isopropanol, n-butanol, ethylene glycol, propylene glycol and butylene glycol.

It is preferred, however, that the emulsion should contain methanol.

The present emulsion should also contain a surfactant and/or a protective colloid in an amount generally of 0,01-10 % by weight, preferably 0,5-5 % by weight.

Examples of suitable surfactants and/or protective colloids are mentioned in United States Patent Specification 3 988 261. Accordingly, suitable for use in the present emulsion are : anionic surfactants such as carboxylates, sulphonates, sulphates, sulphated products and phosphate esters ; nonionic surfactants such as ethoxylated alkylphenols, ethoxylated aliphatic alcohols, carboxylic esters, carboxylic amides, polyoxyalkylene oxide block copolymers and polyvinyl alcohol, cationic surfactants and water-soluble cellulose ethers.

It is preferred that the peroxide should be emulsified as such in the aqueous medium. However, it is also possible for the peroxide to be dissolved in an organic solvent such as an aliphatic hydrocarbon and subsequently dispersing this solution in the aqueous medium.

The emulsions are prepared in the usual manner and with the aid of equipment known to be used for this purpose (see for instance, United States Patent Specification 3 988 261).

Generally, the surfactant and/or the protective colloid are dissolved in water, after which successively the alcohol and the organic peroxide are added. However, the order in which these substances are added is not critical. Organic peroxide, because of its instability, is usually added at a temperature below 5 °C. For agitating the emulsion use may be made of known emulsification equipment.

The particle size of the resulting emulsion is generally below 10 µm and preferably below 1 µm.

The present emulsions can be used in the suspension (co)polymerization of ethylenically unsaturated compounds. As examples of ethylenically unsaturated compounds may be mentioned :

butadiene, isoprene, 1,4-pentadiene, 1,6-hexadiene, 1,7-octadiene ; polymerizable ethylenically monomers, such as styrene or substituted styrenes, such as methyl styrene, 2,4-dimethyl styrene, ethyl styrene, isopropyl styrene, butyl styrene, phenyl styrene, cyclohexyl styrene, benzyl styrene, styrenes substituted with one or more halogen atoms, such as chlorostyrene, 2,5-dichlorostyren, bromostyrene, fluorostyrene, trifluoromethyl styrene, iodostyrene ; styrenes substituted with one or more functional groups, such as cyanostyrene, nitrostyrene, acetostyrene, phenoxystyrene ; acryl monomers and substituted acryl monomers, such as acrylic acid, methacrylic acid and the esters thereof having 1-18 carbon atoms, cyclohexyl (meth)acrylate, benzyl (meth)acrylate, isopropyl (meth)acrylate, butyl acrylate, 2-ethylhexyl acrylate, phenyl (meth)acrylate ; acrylonitrile, methacrylonitrile ; vinyl esters and substituted vinyl esters derived from carboxylic acids containing 1-18 carbon atoms, such as vinyl formate, vinyl acetate, chlorovinyl acetate, vinyl butyrate, vinyl methoxyacetate, vinyl benzoate, methyl-4-vinyl benzoate, isopropenyl acetate ; vinyl esters derived from unsaturated carboxylic esters containing 1-8 carbon atoms, such as vinyl acrylate, vinyl methacrylate ; vinyl halides, such as vinyl fluoride, vinylidene chloride, vinyl bromide, vinylidene bromide, vinyl iodide ; vinyl compounds having functional groups, such as p-vinylidene sulphide, p-vinylphenyl oxide, vinyl pyridine, vinyl ethers, such as vinylmethyl ether, vinylethyl ether, vinylpropyl ether, vinylbutyl ether, vinyl-2-ethylhexyl ether, vinylphenyl ether, vinyl ketones, such as vinyl-ethyl ketone, vinylphenyl ketone ; allyl esters derived from carboxylic acids containing 1-18 carbon atoms ; and vinyl chloride.

It is preferred that the present aqueous emulsion should be used in the suspension polymerization of vinyl chloride.

The above suspension (co)polymerization is carried out in a generally known manner.

The following examples serve to illustrate the present invention.

## Example 1

In 478 g of water of 40 °C there were dissolved 20 g of ethoxylated nonyl phenol and 2 g of xanthan gum. To this solution there were added 100 g of methanol. The solution was cooled to 2 °C, followed by adding 400 g of di-2-ethylhexyl peroxydicarbonate, with stirring. The composition could be transported as a liquid emulsion at a temperature of — 10 °C. The peroxide was stable at this temperature, i.e. after 6 months storage the active oxygen content had decreased by only 2 %.

## Example 2

The same procedure was used as in Example 1, whith the exception that instead of 400 g of di-2-ethylhexyl peroxydicarbonate there were added 400 g of di-sec. butyl peroxydicarbonate. The composition permitted being transported at — 10 °C and as far as the stability of the peroxide was concerned, the same results were obtained as in Example 1.

## Example 3

In 448 g of water of 40 °C there were dissolved 20 g of ethoxylated nonyl phenol and 2 g of xanthan gum. To this solution there were added 130 g of ethanol. The solution was cooled to 2 °C, followed by adding 400 g of di-2-ethylhexyl peroxydicarbonate, with stirring. The compositions could be transported as a liquid emulsion at — 10 °C. After 8 weeks' storage of the emulsion at this temperature the active oxygen content had decreased by only 1,0 %. For di-2-ethylhexyl peroxydicarbonate as such this loss was 0,5 %, the compound being stored over the same period and at the same temperature.

## Example 4

The same procedure was used as in Example 3, with the exception that instead of 400 g of di-2-ethylhexyl peroxydicarbonate there were added 400 g of tert. butyl peroxyneodecanoate. The composition could be transported at — 10 °C and the peroxide displayed the same stability as in Example 3.

Example 5

The same procedure was used as in Example 3, with the exception that instead of 448 g of water there were used 388 g of water and instead of 130 g of ethanol there were added 190 g of ethylene glycol. The composition could be transported as a liquid emulsion at a temperature of —10 °C. The stability of the peroxide was the same as obtained in Example 3.

Example 6

In 460 g of water of 40 °C there were dissolved 20 g of ethoxylated fatty acid alcohol and 20 g of polyvinyl alcohol. To this solution there were added 100 g of methanol. The solution was cooled to 2 °C, followed by adding 400 g of di-2-ethylhexyl peroxydicarbonate, with stirring. The composition could be transported as a liquid emulsion at a temperature of —10 °C. After 8 weeks' storage at this temperature the active oxygen content had decreased by only 1 %.

The same results were obtained when use was made of a stabilizer system made up of 20 g of ethoxylated sorbitan ester and 20 g of hydroxypropyl methyl cellulose.

Example 7

In accordance with Example 1 the emulsion was used in the polymerization of vinyl chloride. To this end 0,26 g of the emulsion described in Example 1 were added to a mixture of 340 g of $H_2O$, 200 g of vinyl chloride and 0,2 g of polyvinyl alcohol. The polymerization reaction took place in a 1-litre, stirred polymerization autoclave. The reaction temperature was 55 °C.

For comparison, this experiment was repeated in such a way that in the peroxide emulsion the methanol had been replaced with water. The following table gives a summary of the results. They clearly show that the presence of the methanol had no unfavourable influence on the properties of the polyvinyl chloride obtained

Table 1

| | Use of the emulsion | |
|---|---|---|
| | without methanol | with methanol |
| conversion (%) | 88 | 88 |
| apparent density (g/cm³) | 0,39 | 0.40 |
| plasticizer absorption (%) | 19 | 18 |
| mean particle size (μm) | 152 | 153 |
| dry flow (g/sec) | 3,2 | 3,3 |
| K-value* | 68 | 68 |

*K-value is a parameter for the mol. weight of the polymer.

**Claims**

1. A storage stable aqueous peroxide emulsion comprising an organic peroxide which is liquid at —5 °C, a surfactant and/or a protective colloid, characterized in that the organic peroxide is of the formula

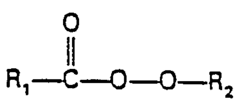

or

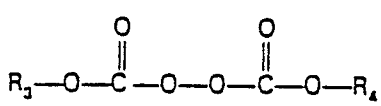

wherein

$R_1$ = a tert. alkyl group having 4-9 carbon atoms or a phenoxy-methyl group,

$R_2$ = an alkyl group having 4-8 carbon atoms or a cumyl group and

$R_3$ and $R_4$ = a substituted or unsubstituted alkyl group having 3-8 carbon atoms, and the emulsion contains 2-20 % by weight of an alkanol having 1-4 carbon atoms and/or an alkane diol having 2-4 carbon atoms, the emulsion being liquid at a temperature in the range of —10 °C to —25 °C.

2. An aqueous emulsion according to claim 1, wherein the organic peroxide is di-2-ethylhexyl peroxydicarbonate.

3. An aqueous emulsion according to claim 1 or 2, characterized in that the emulsion contains methanol as alkanol.

4. A process for the suspension (co-) polymerization of an ethylenically unsaturated compound in the presence of an organic peroxide, characterized in that in the preparation of the (co-) polymerization mixture use is made of an aqueous emulsion having previously been prepared and having the composition according to any one of the preceding claims.

5. A process according to claim 4, wherein the ethylenically unsaturated compound is vinyl chloride.

## Patentansprüche

1. Eine lagerbeständige wässrige Peroxid-Emulsion, ein organisches Peroxid, das bei — 5 °C flüssig ist, ein oberflächen-aktives Mittel und/oder ein Schutzkolloid enthaltend, dadurch gekennzeichnet, dass das organische Peroxid die Formeln

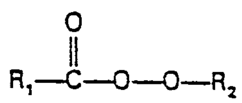

oder

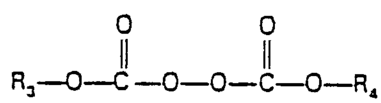

hat, wobei

$R_1$ eine tertiäre Alkylgruppe mit 4 bis 9 Kohlenstoffatomen oder eine Phenoxy-Methyl-Gruppe ist

$R_2$ eine Alkylgruppe mit 4 bis 8 Kohlenstoffatomen oder eine Cumylgruppe ist und

$R_3$ und $R_4$ je eine substituierte oder unsubstituierte Alkylgruppe mit 3 bis 8 Kohlenstoffatomen ist, und dass die Emulsion 2 bis 20 Gewichtsprozent eines Alkanols mit 1 bis 4 Kohlenstoffatomen und/oder ein Alkandiol mit 2 bis 4 Kohlenstoffatomen enthält, wobei die Emulsion bei einer Temperatur in dem Bereich von — 10 °C bis — 25 °C flüssig ist.

2. Eine wässrige Emulsion gemäss Anspruch 1, in der das organische Peroxid Di-2-äthylhexyl-peroxydicarbonat ist.

3. Eine wässrige Emulsion gemäss Anspruch 1 oder 2, dadurch gekennzeichnet, dass die Emulsion Methanol als Alkanol enthält.

4. Ein Verfahren zur Suspensions-(Co)-Polymerisation einer äthylenisch-ungesättigten Verbindung in Gegenwart eines organischen Peroxids, dadurch gekennzeichnet, dass bei der Herstellung des (Co) Polymerisations-gemisches eine vorher bereitete wässrige Emulsion verwendet wird deren Zusammensetzung einem der vorstehenden Ansprüche entspricht.

5. Ein Verfahren gemäss Anspruch 4, wobei die äthylenisch-ungesättigte Verbindung Vinylchlorid ist.

## Revendications

1. Une émulsion aqueuse de peroxyde stable au stockage comprenant un peroxyde organique qui est liquide à — 5 °C, un agent tensio-actif et/ou un colloïde protecteur, caractérisée en ce que le peroxyde organique a pour formule

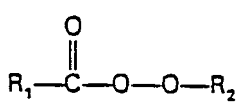

ou

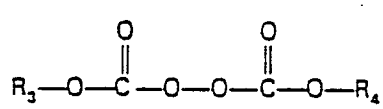

où

$R_1$ est un radical tert-alkyle ayant 4 à 9 atomes de carbone ou un radical phénoxyméthyle,

$R_2$ est un radical alkyle ayant 4 à 8 atomes de carbone ou un radical cumyle et

$R_3$ et $R_4$ sont un radical alkyle substitué ou non substitué ayant 3 à 8 atomes de carbone, et l'émulsion contient 2 à 20 % en poids d'un alcanol ayant 1 à 4 atomes de carbone et/ou d'un alcanediol ayant 2 à 4 atomes de carbone et demeure liquide à une température comprise dans la gamme de — 10 °C à — 25 °C.

2. Une émulsion aqueuse selon la revendication 1 dans laquelle le peroxyde organique est le peroxydicarbonate de di-(éthyl-2-hexyle).

3. Une émulsion aqueuse selon l'une des revendications 1 ou 2, caractérisée en ce que l'émulsion contient du méthanol comme alcanol.

4. Un procédé de (co)polymérisation en suspension d'un composé à insaturation éthylénique en présence d'un peroxyde organique, caractérisé en ce que dans la préparation du mélange de (co) polymérisation on emploie une émulsion aqueuse préparée auparavant ayant une composition selon l'une quelconque des revendications précédentes.

5. Un procédé selon la revendication 4 dans lequel le composé à insaturation éthylénique est le chlorure de vinyle.